# EUROPÄISCHE PATENTSCHRIFT

(11) **EP 1 380 042 B1**
(45) Veröffentlichungstag und Bekanntmachung des Hinweises auf die Patenterteilung: **21.06.2006**
(21) Anmeldenummer: 02729856.1
(22) Anmeldetag: 08.04.2002
(51) Int. Cl.: H01H 73/00

(54) **SCHALTGERÄTEEINHEIT FÜR EINEN VERBRAUCHER, INSBESONDERE MOTORSTARTER**
SWITCHGEAR UNIT FOR A CONSUMER, ESPECIALLY A MOTOR STARTER
UNITE DE DISTRIBUTION, NOTAMMENT DEMARREUR DE MOTEUR, POUR UN CONSOMMATEUR

(30) Priorität: 20.04.2001 DE 10119458
(43) Veröffentlichungstag der Anmeldung: 14.01.2004
(73) Patentinhaber: SIEMENS AKTIENGESELLSCHAFT, 80333 München (DE)
(72) Erfinder: BUSCH, Klaus, 92224 Amberg (DE); FREIMUTH, Michael, 92242 Hirschau (DE); GEBHARDT, Manuela, 92266 Wolfsbach (DE)
(86) Internationale Anmeldenummer: PCT/DE2002/001282
(87) Internationale Veröffentlichungsnummer: WO 2002/086929

(56) Entgegenhaltungen:
- EP-A- 0 343 390
- WO-A-99/23737
- DE-A- 4 335 965
- FR-A- 2 003 575

## Beschreibung

Die Erfindung betrifft eine Schaltgeräteeinheit für einen Verbraucher, insbesondere einen Motorstarter, mit einer Schalteinheit für ein betriebsgemäßes Schalten des Verbrauchers und mit den Funktionen Kurzschlussschutz und Überlastschutz.

Die Schaltgeräteeinheit wird allgemein auch als Verbraucherabzweig bezeichnet und üblicherweise in einem Schaltschrank auf einer genormten Hutschiene neben weiteren Verbraucherabzweigen angeordnet. Die in einem Schaltschrank angeordneten Verbraucherabzweige sind in einer modularen Bauweise zusammengestellt, um den jeweiligen Anforderungen entsprechen zu können. Derartige Verbraucherabzweige sind insbesondere in der industriellen Anlagentechnik zum Steuern und Schalten von hohen Strömen und Spannungen vorgesehen. Insbesondere wird mit der Schaltgeräteeinheit ein Drehstrommotor angesteuert. Die Schaltgeräteeinheit wird in diesem Fall auch als Motorstarter bezeichnet.

Die Schaltgeräteeinheit eines Motorstarters weist zum Schutz des Motors in der Regel drei Funktionen auf. Die erste Funktion betrifft das betriebsgemäße Schalten des Motors und ist durch eine eigene Standardbaueinheit, üblicherweise ein sogenanntes Schütz, verwirklicht. Das Schütz ist für das wiederholte betriebsgemäße Ein- und Ausschalten von hohen Strömen ausgebildet. Weiterhin sind in einer Schaltgeräteeinheit die Funktionen Kurzschlussschutz und Überlastschutz in einer als Leistungsschalter bezeichneten Standardbaueinheit integriert. Der Leistungsschalter trennt den Verbraucher vom Netz bei Auftreten eines Kurzschlusses und auch bei Auftreten eines zu hohen Stroms. Die beiden Standardbaueinheiten sind auf einem gemeinsamen Träger nebeneinander angeordnet und bilden die Schaltgeräteeinheit.

Aus der DE 43 35 965 ist ein Motorstarter mit integriertem Kurzschlussschutz zu entnehmen, bei dem hintereinander ein Leistungsschalter, eine elektronische Auslöseeinheit sowie ein Schütz angeordnet sind. Die elektronische Auslöseeinheit ist zusammen mit dem Leistungsschalter in einem gemeinsamen Gehäuse integriert. Die Auslöseeinheit umfasst hierbei einen Auslöser, der den thermischen Überlastschutz des Motors gewährleistet.

Aus der FR 2 003 575 ist ein Schütz mit einem als Anbauteil vorgesehenen Kurzschlussauslöser und mit einem Anbaustück versehen, das einen thermischen Überstromauslöser enthält.

Aus der WO 99/23737 ist eine Schaltgeräteeinheit bekannt, die einen Schütz und einen Leistungsschalter jeweils als separate Baueinheiten beinhaltet. Diese Baueinheiten sind auf einem Zwischenträger angeordnet, in dem eine Leiterplatte mit einer Elektronik integriert ist. Über diese Elektronik besteht die Mögiichkeit, die Schal-tgeräteeinheit über ein Bussystem anzusteuern. Hierbei sind insbesondere zwei Bussysteme vorgesehen, nämlich ein Datenbus zum Signalaustausch und ein Energiebus zur Energieversorgung. Anstelle der standardgemäßen Baueinheiten Schütz und Leistungsschalter wird alternativ eine elektronische Schaltung vorgeschlagen, die jedoch im Vergleich zu den elektromechanisch ausgebildeten Baueinheiten Schütz und Leistungsschalter für das Schalten von sehr hohen Strömen weniger geeignet oder sehr aufwendig und teuer ist.

Aufgabe der Erfindung ist es, eine möglichst einfach aufgebaute und kostengünstige Schaltgeräteeinheit anzugeben.

Die Aufgabe wird gemäß der Erfindung gelöst durch die Merkmale des Patentanspruchs 1. Danach ist für eine Schaltgeräteeinheit, insbesondere für einen Motorstarter, mit den Funk tionen betriebsgemäßes Schalten, Kurzschlussschutz und Überlastschutz vorgesehen, dass jede dieser Funktionen in einer separaten Funktionseinheit verwirklicht ist. Das betriebsgemäße Schalten wird dabei von einer Schalteinheit, insbesondere Schütz, die Funktion Kurzschlussschutz von einem Leistungsschalter und die Funktion Überlastschutz von einem getrennt vom Leistungsschalter ausgebildeten Überlastschutz sicher zu gewährleisten, muss der Leistungsschalter spezifisch für den jeweils vorgesehenen Schaltstrom ausgelegt werden. Unter Schaltstrom wird hierbei derjenige Strom verstanden, für den die Schaltgeräteeinheit ausgelegt ist. Dies bedeutet, dass beispielsweise für den Schaltstrombereich zwischen 0 und 25 A etwa zwanzig unterschiedlich ausgelegte verschiedene Leistungsschalter erforderlich sind. Dies führt zu einem erheblichen Kostenaufwand und bedarf einer hohen Sorgfalt bei der Auswahl des geeigneten Leistungsschalters.

Erfindungsgemäß ist aufgrund der Trennung der Funktion Kurzschlussschutz und Überlastschutz eine deutliche Vereinfachung erreicht. Insbesondere braucht die Funktion Überlastschutz nicht mehr im Leistungsschalter integriert zu werden und dieser kann in erster Linie für die Funktion Kurzschlussschutz ausgelegt sein. Der Leistungsschalter wird dadurch deutlich einfacher im Aufbau und damit kostengünstiger und kann zudem über einen weiten Strombereich eingesetzt werden. Auch die im Überlastrelais verwirklichte Funktion des Überlastschutzes ist aufgrund deren Entkopplung vom Kurzschlussschutz vergleichsweise einfach auszulegen.

Bevorzugt ist das Überlastrelais als elektronisches Überlastrelais ausgebildet, welches insbesondere einen Stromwandler aufweist. Dieser Stromwandler ist nach Art einer Strommessspule um einen zu überwachenden Leiter angeordnet und erfasst das vom stromdurchflossenen Leiter erzeugte magnetische Feld. Eine an den Stromwandler angeschlossene Auswerteelektronik ermittelt hieraus den durch den Leiter fließenden Strom. Aufgrund dieses Prinzips ist das elektronische Überlastrelais für einen sehr weiten Strombereich einsetzbar. Die Bestimmung, ab welcher Stromhöhe das Überlastrelais auslösen soll, erfolgt über die Elektronik und kann nahezu beliebig eingestellt werden.

Um einen möglichst kostengünstigen und möglichst kompakten Aufbau der Schaltgeräteeinheit zu ermöglichen, sind die Schalteinheit und der Leistungsschalter vorzugsweise als Standardbauteile ausgelegt, die unter Ausbildung eines Freiraums auf einem Träger angeordnet sind. In diesen Freiraum reicht zumindest ein Bauteil des Überlastrelais hinein. Durch diese Maßnahme lässt sich der erforderliche Bauraum für die Schaltgeräteeinheit gering halten, was zu einem geringen Platzbedarf im Schaltschrank und zu geringen Installationskosten führt.

Für die kostengünstige Ausgestaltung ist die Verwendung von Standardbaueinheiten für die Schalteinheit (Schütz) und den Leistungsschalter von besonderem Vorteil. Derartige Standardbaueinheiten weisen üblicherweise an ihrer Unterseite für die Befestigung auf einer Hutschiene eine Aussparung auf, die einen Freiraum bildet, in den das Bauteil vorzugsweise eingreift. Zudem ist zwischen dem Schütz und dem Leistungsschalter üblicherweise ein Zwischenraum angeordnet, der ebenfalls vorteilhafterweise als Freiraum für die Anordnung eines Bauteils des Überlastrelais dient.

Zweckdienlicherweise reicht dabei insbesondere der Stromwandler in den Freiraum hinein, da dieser aufgrund der Ausbildung als Spule den größten Bauraum in Anspruch nimmt. Im Überlastrelais ist für jede Phase des Stromnetzes ein eigener Stromwandler vorgesehen. Diese werden also beispielsweise verteilt in den beiden Aussparungen oder im Zwischenraum angeordnet.

Zweckdienlicherweise ist für eine kompakte Anordnung das Bauteil, das in die Freiräume hineinreicht, auf dem Träger angeordnet, auf dem auch das Schütz und der Leistungsschalter befestigt sind.

In einer besonders zweckdienlichen Ausgestaltung ist vorgesehen, dass die Bauteile des Überlastrelais auf einer vom Träger gehaltenen Leiterplatte angeordnet sind. Vorzugsweise trägt die Leiterplatte gleichzeitig eine Buselektronik, so dass die Schaltgeräteeinheit zum Anschluss an ein Bussystem ausgebildet ist. Mit der Integration des elektronischen Überlastrelais auf der Leiterplatte werden in besonders effizienter Weise der Platzbedarf minimiert und die Herstellungskosten gering gehalten. Denn die bei modernen Schaltgeräteeinheiten heute bereits üblicherweise für die Buselektronik verwendete Leiterplatte braucht lediglich um einige wenige elektronische Funktionalitäten erweitert werden. Aufgrund des hohen Automatisierungsgrads in der Leiterplattenherstellung erfordert dies einen nur geringen zusätzlichen Aufwand. Dem stehen erhebliche Einsparungen gegenüber, da einerseits der Leistungsschalter ohne die Funktion Überlastschutz vereinfacht ausgebildet sein und standardmäßig für einen weiten Strombereich herangezogen werden kann. Gleichzeitig wird andererseits durch die Integration des elektronischen Überlastrelais auf der Leiterplatte mit den in die Freiräume hineinreichenden Stromwandlern ein sehr geringes Bauvolumen erreicht, das zusätzlich die Kosten für die Installation der Schaltgeräteeinheit niedrig hält.

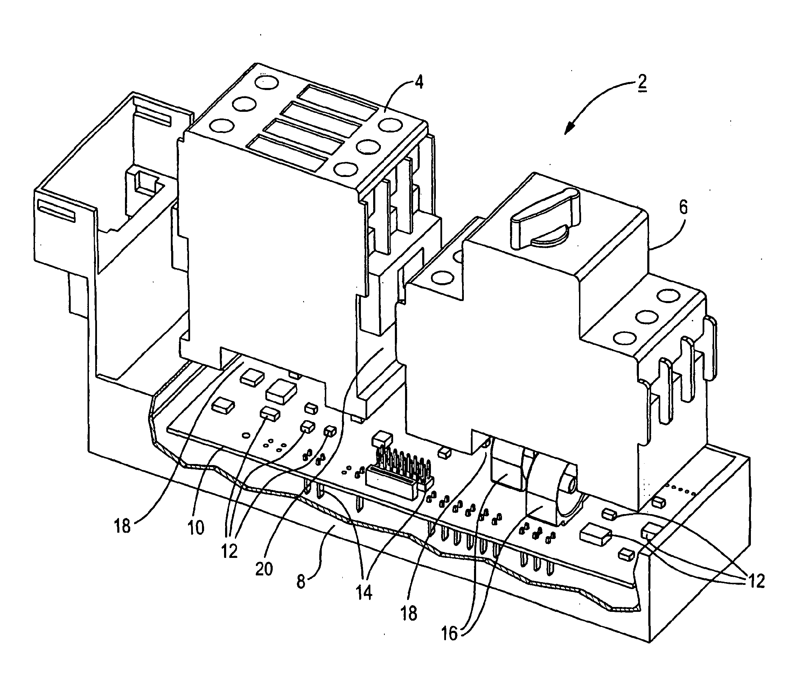

Ein Ausführungsbeispiel der Erfindung wird im Folgenden anhand der einzigen Figur der Zeichnung näher erläutert. Diese zeigt in einer stark vereinfachten schematischen und perspektivischen Darstellung eine Schaltgeräteeinheit.

Die Schaltgeräteeinheit 2 umfasst ein als Standardbaueinheit ausgebildetes Schütz 4 als Schalteinheit für die Funktion des betriebsgemäßen Schaltens. Weiterhin ist ebenfalls als Standardbaueinheit für die Funktion des Kurzschlussschutzes ein Leistungsschalter 6 vorgesehen. Das Schütz 4 und der Leistungschalter 6 sind für die Anordnung auf einem in etwa L-förmig ausgebildeten Träger 8 vorgesehen. Der Träger 8 ist üblicherweise zum Aufschnappen oder Aufschieben auf einer Hutschiene in einem Schaltschrank vorgesehen.

Im Boden des Trägers 8 ist eine Leiterplatte 10 integriert, die eine Mehrzahl von elektronischen Bauelementen 12 sowie Kontaktierungseinrichtungen 14 trägt. Auf der Leiterplatte 10 ist insbesondere eine Buselektronik integriert, so dass die Schaltgeräteeinheit 2 an einem Bussystem angeschlossen werden kann. Dies ist beispielsweise ein Signalbus zur Übermittlung von Signalen und/oder ein Energiebus zur Energieversorgung der Schaltgeräteeinheit 2.

Erfindungsgemäß ist nunmehr vorgesehen, dass die Funktion des Überlastschutzes getrennt vom Leistungsschalter 6 verwirklicht ist. Hierzu ist die Funktion des Überlastschutzes durch ein elektronisches Überlastrelais verwirklicht, das insbesondere für jeden Phasenleiter des Stromnetzes einen Stromwandler 16 aufweist. Zum elektronischen Überlastrelais zugehörig sind darüber hinaus einige der auf der Leiterplatte 10 angeordneten Bauelemente 12. Der Stromwandler 16 ist als Strommessspule ausgebildet und dient zur Erfassung des Magnetfeldes, das vom stromdurchflossenen Phasenleiter erzeugt wird. Aus den Signalen der Stromwandler 16 werden mittels der Bauelemente 12 die jeweiligen Stromhöhen ermittelt.

Aufgrund der Verwendung von Standardbaueinheiten für das Schütz 4 und den Leistungsschalter 6 haben diese an ihrer Unterseite jeweils eine Aussparung 18 für eine Anordnung auf einer Hutschiene. Bei der Anordnung des Schützes 4 und des Leistungsschalters 6 auf dem Träger 8 ist konstruktionsbedingt zwischen diesen Baueinheiten ein Zwischenraum 20 ausgebildet. Die Aussparungen 18 sowie der Zwischenraum 20 bilden konstruktionsbedingte Freiräume.

Um diese vorhandenen Freiräume sinnvoll auszunutzen, reichen die Stromwandler 16 in diese Freiräume hinein. Im Ausführungsbeispiel sind zwei Stromwandler 16 dargestellt, die in die Aussparung 18 des Leistungsschalters 6 hineinreichen. Alternativ hierzu können die Stromwandler auch über beide Aussparungen 18 und den Zwischenraum 20 verteilt angeordnet sein oder ausschließlich im Zwischenraum 20 oder ausschließlich in der Aussparung 18 des Schützes 4 angeordnet sein.

Aufgrund der Ausnutzung der konstruktionsbedingt bestehenden Freiräume ist der Platzbedarf für die Schaltgeräteeinheit 2 insgesamt sehr gering gehalten. Dadurch wird ein kompaktes Bauvolumen erreicht und der Platzbedarf im Schaltschrank und damit die Installationskosten sind gering gehalten. Zudem ist eine Vereinfachung des Leistungsschalters durch die Integration der Funktion des Überlastschutzes in einer vom Leistungsschalter 6 getrennten Einheit, dem elektronischen Überlastrelais, ermöglicht.

## Patentansprüche

1. Schaltgeräteeinheit (2) für einen Verbraucher, insbesondere Motorstarter, mit einer Schalteinheit (4) für ein betriebsgemäßes Schalten des Verbrauchers und mit den Funktionen Kurzschlussschutz und Überlastschutz, wobei die Funktion Kurzschlussschutz in einem Leistungsschalter (6), und die Funktion Überlastschutz in einer separaten Funktionseinheit in einem getrennt vom Leistungsschalter (6) ausgebildeten elektronischen überlastrelais (12,16) integriert ist, und wobei die Schalteinheit (4) und der Leistungsschalter (6) als Standardbauteile mit jeweils einem für die Befestigung auf einer Hutschiene vorgesehenen Freiraums an ihrer Unterseite ausgebildet sind und dass zumindest ein Bauteil (16) des elektronischen Überlastrelais (12,16) in den Freiraum hineinreicht.

2. Schaltgeräteeinheit (2) nach Anspruch 1, **dadurch gekennzeichnet , dass** der Leistungsschalter (6) und die Schalteinheit (4) unter Bildung eines Zwischenraums (20) nebeneinander angeordnet sind, in den das Bauteil (16) oder ein weiteres Bauteil (16) hineinreicht.

3. Schaltgeräteeinheit (2) nach einem der Ansprüche 1 oder 2, **dadurch gekennzeichnet , dass** das Überlastrelais (12,16) einen Stromwandler (16) aufweist, der in den Freiraum (18,20) hineinreicht.

4. Schaltgeräteeinheit (2) nach einem der Ansprüche 1 bis 3, **dadurch gekennzeichnet , dass** das Bauteil (16) des Überlastrelais (12,16) auf dem Träger (8) angeordnet ist.

5. Schaltgeräteeinheit (2) nach einem der Ansprüche 1 bis 4, **dadurch gekennzeichnet , dass** die Bauteile (12,16) des Überlastrelais auf einer vom Träger (8) gehaltenen Leiterplatte (10) angeordnet sind.

6. Schältgeräteeinheit (2) nach Anspruch 5, **dadurch gekennzeichnet , dass** die Leiterplatte (10) eine Buselektronik (12) trägt.

## Claims

1. Switchgear unit (2) for a load, in particular a motor starter, having a switching unit (4) for switching the load during operation, and having the functions of short-circuit protection and overload protection, the function of short-circuit protection being integrated in a circuit breaker (6), and the function of overload protection being integrated in a separate functional unit in an electronic overload relay (12, 16) which is separate from the circuit breaker (6), and the switching unit (4) and the circuit breaker (6) being in the form of standard components, each having a free space underneath, which is provided for mounting them on a top-hat rail, and at least one component (16) of the electronic overload relay (12, 16) extending into the free space.

2. Switchgear unit (2) according to Claim 1, **characterized in that** the circuit breaker (6) and the switching unit (4) are arranged next to one another so as to form an interspace (20) into which the component (16) or a further component (16) extends.

3. Switchgear unit (2) according to either of Claims 1 and 2, **characterized in that** the overload relay (12, 16) has a current transformer (16) which extends into the free space (18, 20).

4. Switchgear unit (2) according to one of Claims 1 to 3, **characterized in that** the component (16) of the overload relay (12, 16) is arranged on the carrier (8).

5. Switchgear unit (2) according to one of Claims 1 to 4, **characterized in that** the components (12, 16) of the overload relay are arranged on a printed circuit board (10) on the carrier (8).

6. Switchgear unit (2) according to Claim 5, **characterized in that** the printed circuit board (10) is fitted with an electronic bus system (12).

## Revendications

1. Unité d'appareil de commutation (2) pour un consommateur, notamment démarreur de moteur, avec une unité de commutation (4) pour une commutation normale du consommateur et avec les fonctions protection contre les courts-circuits et protection contre les surcharges, la fonction protection contre les courts-circuits étant intégrée dans un disjoncteur de puissance (6), la fonction protection contre les surcharges étant intégrée dans une unité fonctionnelle séparée dans un relais électronique de surcharge (12, 16) conçu séparément du disjoncteur de puissance (6), l'unité de commutation (4) et le disjoncteur de puissance (6) étant conçus comme des composants standards avec à chaque fois sur leur côté inférieur un espace libre prévu pour la fixation sur un profilé chapeau et au moins un élément (16) du relais électronique de surcharge (12, 16) arrivant à l'intérieur de l'espace libre.

2. Unité d'appareil de commutation (2) selon la revendication 1, **caractérisée par le fait que** le disjoncteur de puissance (6) et l'unité de commutation (4) sont disposés l'un à côté de l'autre en formant un espace intermédiaire (20) à l'intérieur duquel arrive l'élément (16) ou un autre élément (16).

3. Unité d'appareil de commutation (2) selon l'une des revendications 1 ou 2, **caractérisée par le fait que** le relais de surcharge (12, 16) comporte un convertisseur de courant (16) qui arrive à l'intérieur de l'espace libre (18, 20).

4. Unité d'appareil de commutation (2) selon l'une des revendications 1 à 3, **caractérisée par le fait que** l'élément (16) du relais de surcharge (12, 16) est disposé sur le support (8).

5. Unité d'appareil de commutation (2) selon l'une des revendications 1 à 4, **caractérisée par le fait que** les éléments (12, 16) du relais de surcharge sont disposés sur une carte de circuits imprimés (10) soutenue par le support (8).

6. Unité d'appareil de commutation (2) selon la revendication 5, **caractérisée par le fait que** la carte de circuits imprimés (10) supporte une électronique de bus (12).
